# EUROPEAN PATENT APPLICATION

(11) **EP 3 240 309 A1**
(43) Date of publication of application: **01.11.2017**
(21) Application number: 17163166.6
(22) Date of filing: 27.03.2017
(51) Int. Cl.: H04W 4/00, H04W 84/18, H04L 29/08, H04W 4/02, H04L 12/28, H04W 68/00

(54) **INFORMATION PROCESSING DEVICE, INFORMATION PROCESSING PROGRAM, AND INFORMATION PROCESSING METHOD**

(30) Priority: 25.04.2016 JP 2016087286
(71) Applicant: FUJITSU LIMITED, Kawasaki-shi, Kanagawa 211-8588 (JP)
(72) Inventor: GUO, Zhaogong, Kanagawa 211-8588 (JP); YURA, Junichi, Kanagawa 211-8588 (JP); MATSUMOTO, Tatsuro, Kanagawa 211-8588 (JP)
(74) Representative: Hutchison, James

(57) **Abstract**

A mobile device (1) stores, as an application binary, an application equivalent to an application incorporated in another device (2, 3) in a specific region connectable to a network. When a function of acquiring the predetermined information is available to the mobile device (1), the mobile device (1) acquires predetermined information using the application and transmits the acquired information to the specific region. When the function of acquiring the predetermined information is unavailable to the mobile device (1), the mobile device (1) receives the acquired information from the other device (2, 3) in the specific region.

## Description

### FIELD

The embodiments discussed herein are related to an information processing device and the like.

### BACKGROUND

In recent years, devices on which a short distance communication function is mounted can use such a function to acquire information from an Internet of Things (IoT) device in a specific place or use the IoT device. Examples of the IoT device include a sensor or a printer on which the short distance communication function is mounted. Examples of the specific place include a store, a school classroom, and a sensor range.

For example, in a case in which a mobile terminal not having a sensor function is positioned in the sensor range, sensor data measured by a fixed sensor device serving as the IoT device is regarded as data at the position of the mobile terminal and transmitted to a center device via a network. The center device accumulates the sensor data. For the mobile terminal, disclosed is information collecting/providing module that can acquire the accumulated sensor data based on a request from a reading device connected to the network (for example, refer to Japanese Laid-open Patent Publication No. 2005-311716).

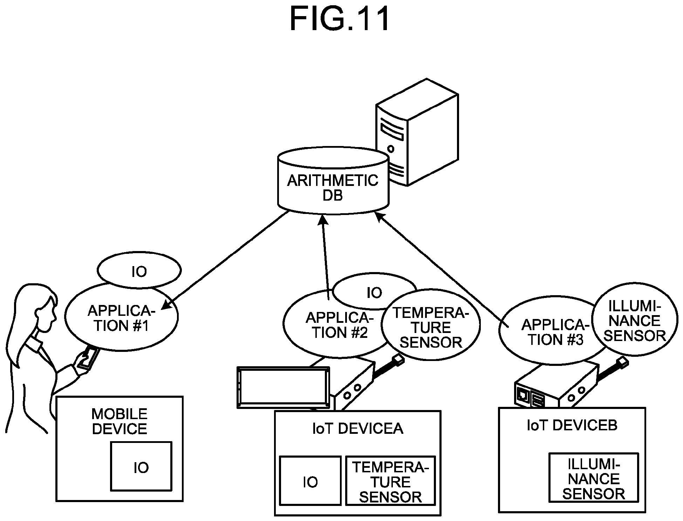

There is known a technique in which an application of a mobile device in a specific place collects and displays sensor data acquired from the IoT device in the same place. FIG. 11 is a diagram illustrating a reference example of processing of collecting and displaying the sensor data performed by the application of the mobile device. As illustrated in FIG. 11, in an IoT device A, an application #2 having a display function (IO) and a temperature sensor is installed for acquiring sensor data using the temperature sensor and registering the acquired sensor data in an arithmetic DB. In an IoT device B, an application #3 including an illuminance sensor is installed for acquiring sensor data using the illuminance sensor and registering the acquired sensor data in the arithmetic DB. In the mobile device, an application #1 having the display function (IO) is installed for acquiring an arithmetic result from the arithmetic DB (DataBase) and displaying the arithmetic result using the display function. The application #1 in the mobile device collects, from the arithmetic DB, the sensor data acquired from the IoT devices A and B in the specific place to be displayed based on an instruction from a user, for example. Conventional technologies are described in Japanese Laid-open Patent Publication No. 2013-140529 and Japanese Laid-open Patent Publication No. 2004-282301, for example.

However, in the related art, there is a problem in that an application used for information exchange takes management cost in exchanging information between devices in a specific place.

For example, the application #1 of the mobile device, the application #2 of the IoT device A, and the application #3 of the IoT device B each operate only in a fixed environment, so that each application takes management cost. By way of example, when the versions of applications are old, new versions of the applications need to be separately installed and managed. By way of another example, network setting needs to be performed for each application to connect the applications to the network. Thus, in exchanging information between devices in a specific place, the applications used for the exchange takes management cost.

Also in the information collecting/providing module, the application of the mobile terminal and the application of the fixed sensor device each operate only in a fixed environment, so that each application similarly takes management cost.

Accordingly, it is desirable to reduce management cost for the application that is used for information exchange in exchanging information between devices in a specific place.

### SUMMARY

The present invention is defined by the appended independent claims, to which reference should now be made. Specific embodiments are defined in the dependent claims.

According to an embodiment of one aspect of the invention, an information processing device includes a processor, and a storage unit. The storage unit stores an application equivalent to an application incorporated in another device in a specific region connectable to a network. The processor executes a process. The process includes executing an application library that when a function of acquiring predetermined information in the specific region is available to the information processing device, acquires the predetermined information using the application and transmits the acquired information to the specific region, and when the function of acquiring the predetermined information is unavailable to the information processing device, receives the acquired information from the other device in the specific region.

### BRIEF DESCRIPTION OF DRAWINGS

Embodiments of the invention are set out by way of example only, with reference to the following drawings, in which:
FIG. 1 is a block diagram illustrating a functional configuration of an information processing system according to a first embodiment;
FIG. 2 is a diagram illustrating an example of a procedure of information exchange processing according to the first embodiment;
FIG. 3 is a diagram illustrating an example of a sequence of information exchange processing according to the first embodiment;
FIG. 4 is a block diagram illustrating a functional configuration of an information processing system according to a second embodiment;
FIG. 5 is a block diagram illustrating a functional configuration of an information processing system according to a third embodiment;
FIG. 6 is a block diagram illustrating a functional configuration of an information processing system according to a fourth embodiment;
FIG. 7 is a diagram illustrating an example of a sequence of information exchange processing according to the fourth embodiment;
FIG. 8 is a block diagram illustrating a functional configuration of an information processing system according to a fifth embodiment;
FIG. 9 is a diagram illustrating an example of a sequence of information exchange processing according to the fifth embodiment;
FIG. 10 is a diagram illustrating an example of a computer that executes an information processing program; and
FIG. 11 is a diagram illustrating a reference example of processing of collecting and displaying sensor data performed by an application of a mobile device.

### DESCRIPTION OF EMBODIMENTS

Preferred embodiments of the present invention will be explained with reference to accompanying drawings. The present invention is not limited to the embodiments.

### [a] First Embodiment

### Configuration of information processing system

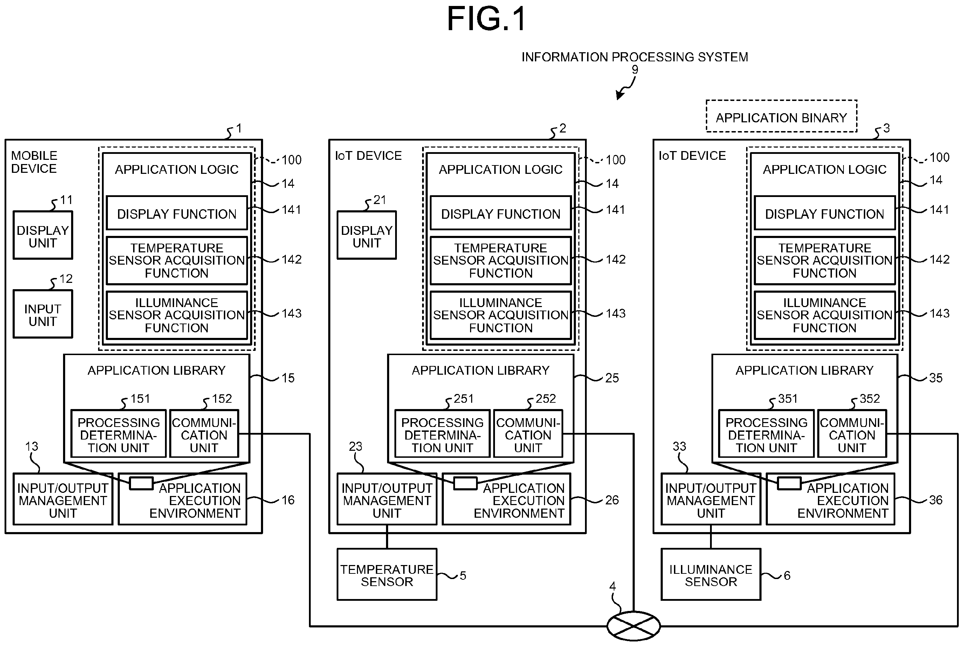

FIG. 1 is a block diagram illustrating a functional configuration of an information processing system according to a first embodiment. An information processing system 9 includes a mobile device 1, an IoT device 2, and an IoT device 3. The mobile device 1, the IoT device 2, and the IoT device 3 are coupled to one another via a network 4. The mobile device 1, the IoT device 2, and the IoT device 3 are examples of an information processing device. The number of the IoT devices 2 and 3 is only two, but the embodiment is not limited thereto. The number of the IoT devices 2 and 3 may be one, or three or more. The number of the mobile device 1 is one, but the embodiment is not limited thereto. The number of the mobile device 1 may be two or more.

Such an information processing device stores an application binary in which functions used for an operation of an application are combined into one. The application binary means an execution file in which the functions used for the operation of the application are packaged. In this case, the function means a display function and a function of acquiring data from a sensor, for example. That is, the mobile device 1, the IoT device 2, and the IoT device 3 each store the same application binary. In acquiring predetermined information in a specific region connectable to the network 4, when the information processing device can use a function of acquiring predetermined information, the information processing device uses the function of the application binary to acquire the predetermined information and transmits the acquired information. When the information processing device is not allowed to use the function of acquiring the predetermined information, the information processing device receives acquired information from another information processing device in the specific region. That is, the information processing device operates even when the function is unavailable due to insufficiency of the hardware used for executing the function. The information processing device obtains usage results from other information processing devices that can use this function.

The mobile device 1 is a device held by a user, for example, a portable terminal such as a smartphone. The mobile device 1 includes a display unit 11, an input unit 12, an input/output management unit 13, application logic 14, an application library 15, and an application execution environment 16.

The display unit 11 corresponds to, for example, a display device such as a liquid crystal display (LCD). The input unit 12 corresponds to, for example, an input device such as a keyboard and a mouse.

The input/output management unit 13 manages an input/output to/from external hardware. For example, the input/output management unit 13 manages an interface with a sensor. The sensor corresponds to, for example, a sensor for measuring a surrounding environment such as an illuminance sensor, a temperature sensor, a lighting sensor, and a human sensor. The sensor is not limited to the sensor for measuring a surrounding environment, and may be a sensor for measuring a state. Examples of the sensor for measuring a state include a door sensor, a window sensor, an electric energy detection sensor, and a gas amount detection sensor.

The application logic 14 includes a function (logic) used for the operation of the application. In the first embodiment, the application logic 14 is synonymous with an application binary 100. The application logic 14 has a display function 141, a temperature sensor acquisition function 142, and an illuminance sensor acquisition function 143. The display function 141 is a function used for a display operation of the application. The temperature sensor acquisition function 142 is a function used for an operation of acquiring data from the temperature sensor performed by the application. The illuminance sensor acquisition function 143 is a function used for an operation of acquiring data from the illuminance sensor performed by the application. The application logic 14 is, for example, encoded with HTML or JavaScript (registered trademark). In the above description, the application logic 14 has the display function 141, the temperature sensor acquisition function 142, and the illuminance sensor acquisition function 143. However, the embodiment is not limited thereto, and the application logic 14 may have any function so long as the function is used for the operation of the application.

The application library 15 is a library of the application. The application library 15 is encoded, for example, with HTML or JavaScript. The application library 15 includes, for example, a processing determination unit 151 and a communication unit 152 as an application. The application library 15 is implemented in the application execution environment 16 described later.

The processing determination unit 151 determines whether the function of acquiring the predetermined information is available to the mobile device in acquiring the predetermined information in the specific region. For example, the processing determination unit 151 determines whether a device that executes the function of acquiring the predetermined information is mounted in the mobile device 1.

When determining that the function of acquiring the predetermined information is available to the mobile device 1, the processing determination unit 151 acquires corresponding information using the function of the application binary 100. The processing determination unit 151 transmits the acquired information to the specific region via the communication unit 152 described later.

When determining that the function of acquiring the predetermined information is unavailable to the mobile device 1, the processing determination unit 151 receives the acquired information from another device in the specific region via the communication unit 152 described later.

The communication unit 152 communicates with the device in the specific region. The communication method is a method for communicating with a large number of unspecified individuals, for example, broadcasting.

The application execution environment 16 is an environment in which the application is executed, which is implemented in each operation system (OS).

The IoT device 2 is a device obtained by adding a communication function to an object. In this case, the IoT device 2 is a device obtained by adding the communication function to a temperature sensor 5, but the embodiment is not limited thereto. The IoT device 2 includes a display unit 21, an input/output management unit 23, an application library 25, and an application execution environment 26. The display unit 21, the input/output management unit 23, the application library 25, and the application execution environment 26 have the same configuration and operation as those of the display unit 11, the input/output management unit 13, the application library 15, and the application execution environment 16 of the mobile device 1, respectively, so that the description thereof will not be repeated.

The application binary 100, which is the same as that of the mobile device 1, is installed in the IoT device 2. When the application binary 100 is installed in the IoT device 2, the application binary 100 is distributed via the mobile device 1. For example, when a screen is touched, the mobile device 1 distributes the application binary 100 associated with the mobile device 1 to the IoT device 2 positioned in the specific region from a server (not illustrated). The IoT device 2 installs therein the distributed application binary 100. As a mechanism of distributing the application binary 100 to the IoT device 2, for example, a technique described in Matsumoto Tatsuro, Shiotsu Shinichi, "Place-based Services Platform Quickly Establishing Connectivity Services between Smart Devices and Equipment at Purpose-specific Places" may be used.

The IoT device 3 is a device obtained by adding the communication function to an object. In this case, the IoT device 3 is a device obtained by adding the communication function to an illuminance sensor 6, but the embodiment is not limited thereto. The IoT device 3 includes an input/output management unit 33, an application library 35, and an application execution environment 36. The input/output management unit 33, the application library 35, and the application execution environment 36 have the same configuration and operation as those of the input/output management unit 13, the application library 15, and the application execution environment 16 of the mobile device 1, so that the description thereof will not be repeated.

The application binary 100 that is the same as that of the mobile device 1 is installed in the IoT device 3. When the application binary 100 is installed in the IoT device 3, the application binary 100 is distributed via the mobile device 1. A mechanism of distributing the application binary 100 to the IoT device 3 is the same as that of the IoT device 2, so that the description thereof will not be repeated.

### Procedure of information exchange processing according to first embodiment

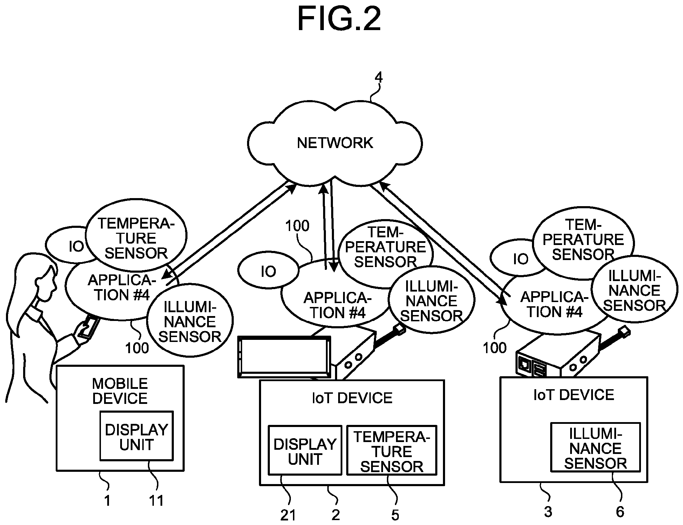

The following describes a procedure of information exchange processing according to the first embodiment with reference to FIG. 2. FIG. 2 is a diagram illustrating an example of the procedure of information exchange processing according to the first embodiment. As illustrated in FIG. 2, the mobile device 1, the IoT device 2, and the IoT device 3 each store the same application #4. The application #4 is the application binary 100 obtained by packaging a display function, a function of acquiring a sensor value from the temperature sensor, and a function of acquiring a sensor value from the illuminance sensor. The mobile device 1 includes the display unit 11. The IoT device 2 includes the display unit 21 and the temperature sensor 5. The IoT device 3 includes the illuminance sensor 6.

In this case, it is assumed that a user wants to display the sensor value of the temperature sensor. The mobile device 1 that receives an instruction from the user to display the sensor value of the temperature sensor transmits the instruction to the network 4. A transmission method is, for example, broadcasting for transmitting data to a large number of unspecified individuals in the network 4.

In a case in which the function of acquiring the sensor value from the temperature sensor is available to the IoT device 2, the IoT device 2, upon receiving the instruction, uses the function of the application binary 100 to acquire the sensor value from the temperature sensor, and transmits acquired data. In a case in which the function of acquiring the sensor value from the temperature sensor is unavailable to the IoT device 2, the IoT device 2 receives the acquired data from another device in the specific region. In this case, the IoT device 2 includes the temperature sensor 5, so that the IoT device 2 acquires the sensor value from the temperature sensor 5 and transmits the acquired data.

In a case in which the function of acquiring the sensor value from the temperature sensor is available to the IoT device 3, the IoT device 3, upon receiving the instruction, uses the function of the application binary 100 to acquire the sensor value from the temperature sensor, and transmits the acquired data. In a case in which the function of acquiring the sensor value from the temperature sensor is unavailable to the IoT device 3, the IoT device 3 receives the acquired data from another device in the specific region. In this case, the IoT device 3 does not include the temperature sensor 5, so that the IoT device 3 receives the acquired data from the IoT device 2 in the specific region.

In a case in which the function of acquiring the sensor value from the temperature sensor is available to the mobile device 1, the mobile device 1, upon receiving the instruction, uses the function of the application binary 100 to acquire the sensor value from the temperature sensor, and transmits the acquired data. In a case in which the function of acquiring the sensor value from the temperature sensor is unavailable to the mobile device 1, the mobile device 1 receives the acquired data from another device in the specific region. In this case, the mobile device 1 does not include the temperature sensor 5, so that the mobile device 1 receives the acquired data from the IoT device 2 in the specific region. The mobile device 1 includes the display unit 11, so that the mobile device 1 displays the received acquired data on the display unit 11.

### Sequence of information exchange processing according to first embodiment

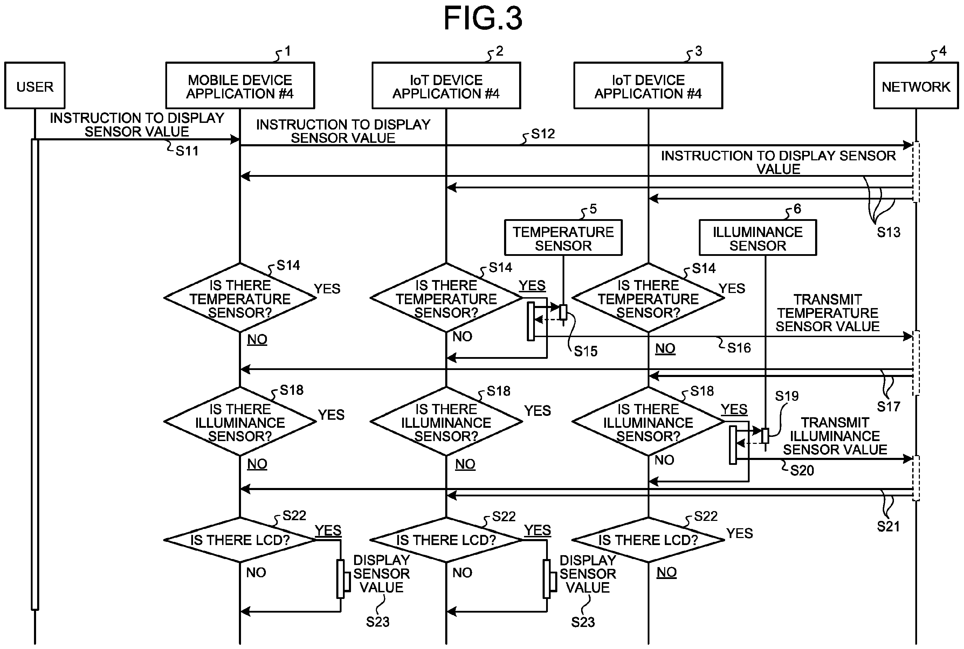

Next, the following describes a sequence of information exchange processing according to the first embodiment with reference to FIG. 3. FIG. 3 is a diagram illustrating an example of the sequence of information exchange processing according to the first embodiment. The sequence illustrated in FIG. 3 is used for a device configuration of the information processing system 9 illustrated in FIG. 1.

After receiving the instruction to display the sensor value from the user, the mobile device 1 transmits the instruction to display the sensor value to the network 4 through broadcasting (S11 and S12). Then, the instruction to display the sensor value is transmitted to the mobile device 1, the IoT device 2, and the IoT device 3 via the network 4 (S13).

In the mobile device 1 that has received the instruction to display the sensor value, the processing determination unit 151 determines whether there is the temperature sensor 5 in the mobile device 1 (S14). The temperature sensor 5 is not mounted in the mobile device 1, so that the processing determination unit 151 does nothing.

In the mobile device 1, the processing determination unit 151 determines whether there is the illuminance sensor 6 in the mobile device 1 (S18). The illuminance sensor 6 is not mounted in the mobile device 1, so that the processing determination unit 151 does nothing.

In the IoT device 2 that has received the instruction to display the sensor value, a processing determination unit 251 determines whether there is the temperature sensor 5 in the IoT device 2 (S14). The temperature sensor 5 is mounted in the IoT device 2, so that the processing determination unit 251 acquires the sensor value from the temperature sensor 5 using a function of the application binary 100 (S15). The processing determination unit 251 transmits a temperature sensor value acquired via a communication unit 252 to the network 4 through broadcasting (S16). The temperature sensor value is then transmitted to the mobile device 1 and the IoT device 3 via the network 4 (S17).

In the IoT device 2, the processing determination unit 251 determines whether there is the illuminance sensor 6 in the IoT device 2 (S18). The illuminance sensor 6 is not mounted in the IoT device 2, so that the processing determination unit 251 does nothing.

In the IoT device 3 that has received the instruction to display the sensor value, a processing determination unit 351 determines whether there is the temperature sensor 5 in the IoT device 3 (S14). The temperature sensor 5 is not mounted in the IoT device 3, so that the processing determination unit 351 does nothing.

In the IoT device 3, the processing determination unit 351 determines whether there is the illuminance sensor 6 in the IoT device 3 (S18). The illuminance sensor 6 is mounted in the IoT device 3, so that the processing determination unit 351 acquires the sensor value from the illuminance sensor 6 using the function of the application binary 100 (S19). The processing determination unit 351 transmits an illuminance sensor value acquired via a communication unit 352 to the network 4 through broadcasting (S20). The illuminance sensor value is then transmitted to the mobile device 1 and the IoT device 2 via the network 4 (S21).

In the mobile device 1, the processing determination unit 151 determines whether there is an LCD in the mobile device 1 (S22). The mobile device 1 includes the LCD (display unit 11), so that the processing determination unit 151 displays the received sensor value (S23). That is, the processing determination unit 151 displays the temperature sensor value of the temperature sensor 5 mounted in the IoT device 2 and the illuminance sensor value of the illuminance sensor 6 mounted in the IoT device 3.

In the IoT device 2, the processing determination unit 251 determines whether there is the LCD in the IoT device 2 (S22). The IoT device 2 includes the LCD (display unit 21), so that the processing determination unit 251 displays the received sensor value (S23). That is, the processing determination unit 251 displays the temperature sensor value of the temperature sensor 5 mounted in the IoT device 2 and the illuminance sensor value of the illuminance sensor 6 mounted in the IoT device 3.

In the IoT device 3, the processing determination unit 351 determines whether there is the LCD in the IoT device 3 (S22). The IoT device 3 does not include the LCD, so that the processing determination unit 351 does nothing.

### Effect of first embodiment

In this way, in the first embodiment described above, the information processing device stores an application binary equivalent to the application binary 100 incorporated in the device in the specific region connectable to the network 4. When the function of acquiring the predetermined information is available to the information processing device in acquiring the predetermined information in the specific region, the information processing device acquires the predetermined information using the application binary 100 and transmits the acquired information to the specific region. When the function of acquiring the predetermined information is unavailable to the information processing device, the information processing device receives the acquired information from another device in the specific region. With such a configuration, in a case in which the information processing devices exchange information therebetween in a specific range, the cost for managing the application used for exchanging information can be reduced. That is, when a plurality of information processing devices in the specific region use the same application binary 100, the management cost for the application can be reduced as compared with a case in which a different application is used for each information processing device.

### [b] Second Embodiment

In the first embodiment, the application logic 14 indicating the function used for the operation of the application is assumed to be the application binary 100. However, a unit of the application binary 100 is not limited thereto, and may be the application logic 14 and the application library 15.

In the second embodiment, the application logic 14 and the application library 15 are assumed to be the application binary 100.

### Configuration of information processing system

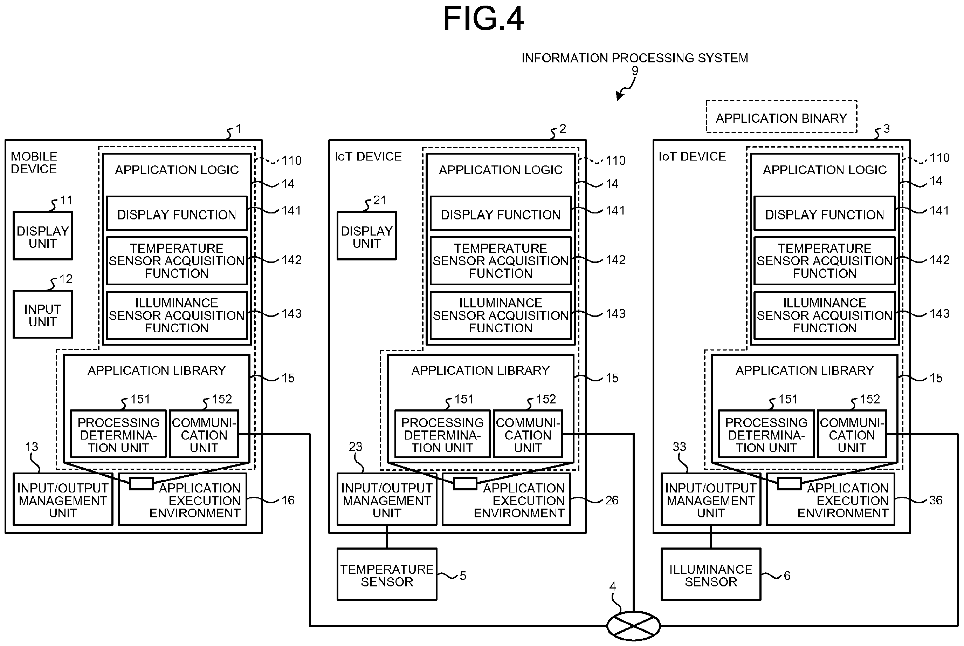

FIG. 4 is a block diagram illustrating a functional configuration of the information processing system according to a second embodiment. The same configuration as that of the information processing system 9 illustrated in FIG. 1 is denoted by the same reference numeral, and redundant description of the configuration and the operation will not be repeated. The second embodiment is different from the first embodiment in that the application logic 14 and the application library 15 are assumed to be an application binary 110. That is, in the IoT device 2 and the IoT device 3, installed is the application binary 110, which is the same as that of the mobile device 1, obtained by packaging the application logic 14 and the application library 15.

### Effect of second embodiment

In this way, in the second embodiment described above, the information processing device packages the application logic 14 and the application library 15 to be stored therein. Accordingly, although the information processing device does not execute the information exchange processing unless the application library 15 is mounted in the application execution environment 16, the information processing device can execute the processing by incorporating the application library 15 in the application binary 110. In a case in which the version of the application library 15 is frequently updated, the cost of the information processing devices for managing the application library 15 can be reduced as compared with a case in which a different application library 15 is used for each information processing device.

### [c] Third Embodiment

In the first embodiment, the application logic 14 indicating the function used for the operation of the application is assumed to be the application binary 100. In the second embodiment, the application logic 14 and the application library 15 are assumed to be the application binary 110. However, the unit of the application binary is not limited thereto, and may be the application logic 14, the application library 15, and the application execution environment 16.

In the third embodiment, the application logic 14, the application library 15, and the application execution environment 16 are assumed to be the application binary. The application binary is not limited to one type. When OSs are different from each other, the application execution environment 16 is different for each of the OSs, so that a plurality of types of application binaries may be used.

### Configuration of information processing system

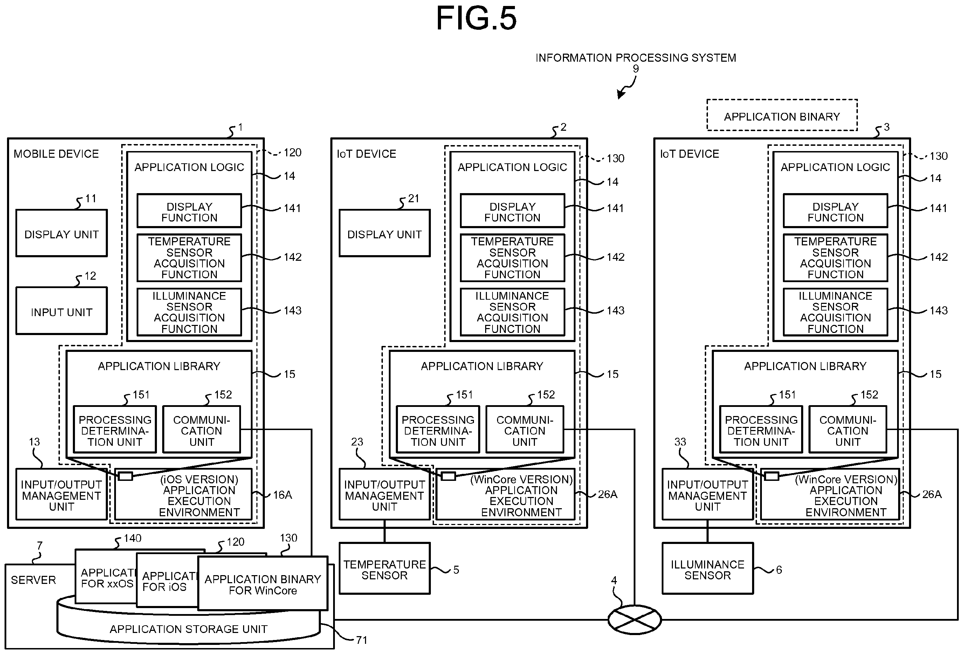

FIG. 5 is a block diagram illustrating a functional configuration of the information processing system according to the third embodiment. The same configuration as that of the information processing system 9 illustrated in FIG. 4 is denoted by the same reference numeral, and redundant description of the configuration and the operation will not be repeated. The third embodiment is different from the second embodiment in that the application logic 14, the application library 15, and an (iOS version) application execution environment 16A are assumed to be an application binary 120, and the application logic 14, the application library 15, and a (WinCore version) application execution environment 26A are assumed to be an application binary 130. That is, the application binary is not limited to one type, and when the OSs are different from each other, a plurality of types of application binaries may be used because the different application execution environments 16A and 26A are implemented for each of the different OSs. In this case, the OSs are assumed to be iOS and WinCore, but the embodiment is not limited thereto.

The third embodiment is different from the second embodiment in that a server 7 including the application binary for each OS is added. The server 7 includes an application storage unit 71. The application storage unit 71 stores the application binary 120 for iOS, the application binary 130 for WinCore, and an application binary 140 for xxOS. In this case, each application binary for each OS is assumed to be the application binary 120 for iOS, the application binary 130 for WinCore, and the application binary 140 for xxOS, but the embodiment is not limited thereto.

In the IoT devices 2 and 3, application binaries 120, 130, and 140 are installed, the binaries corresponding to the OS incorporated in the IoT devices 2 and 3. For example, the application binaries 120, 130, and 140 are distributed to the IoT devices 2 and 3 from the server 7 via the mobile device 1. For example, when a screen of the mobile device 1 is touched, the server 7 detects the position of the mobile device 1, and distributes the application binaries 120, 130, and 140 for each OS to the IoT devices 2 and 3 positioned in the specific region associated with the position. The IoT devices 2 and 3 then install the distributed application binaries 120, 130, and 140 therein. As a mechanism of distributing the application binaries 120, 130, and 140 to the IoT device 2, for example, a technique described in Matsumoto Tatsuro, Shiotsu Shinichi, "Place-based Services Platform Quickly Establishing Connectivity Services between Smart Devices and Equipment at Purpose-specific Places" may be used.

### Effect of third embodiment

In this way, in the third embodiment described above, the information processing device packages the application logic 14, the application library 15, and the application execution environments 16A and 26A to be stored therein. Due to this, the information processing device can execute the information exchange processing even when the application execution environments 16A and 26A are not present. The information processing device manages only the application binary for each OS, so that management cost for the application can be reduced.

### [d] Fourth Embodiment

In the first embodiment, described is a case in which the application logic 14 indicating the function used for the operation of the application is assumed to be the application binary 100, and the IoT devices 2 and 3 serving as information processing devices participate in the information exchange processing using the application binary 100 from the beginning. However, the IoT devices 2 and 3 are not limited thereto, and may participate in the information exchange processing using the application binary 100 in progress. The IoT devices 2 and 3 may leave the information exchange processing using the application binary 100 in progress.

Thus, the fourth embodiment describes a case in which the IoT devices 2 and 3 participate in or leave the information exchange processing using the application binary 100 in progress.

### Configuration of information processing system

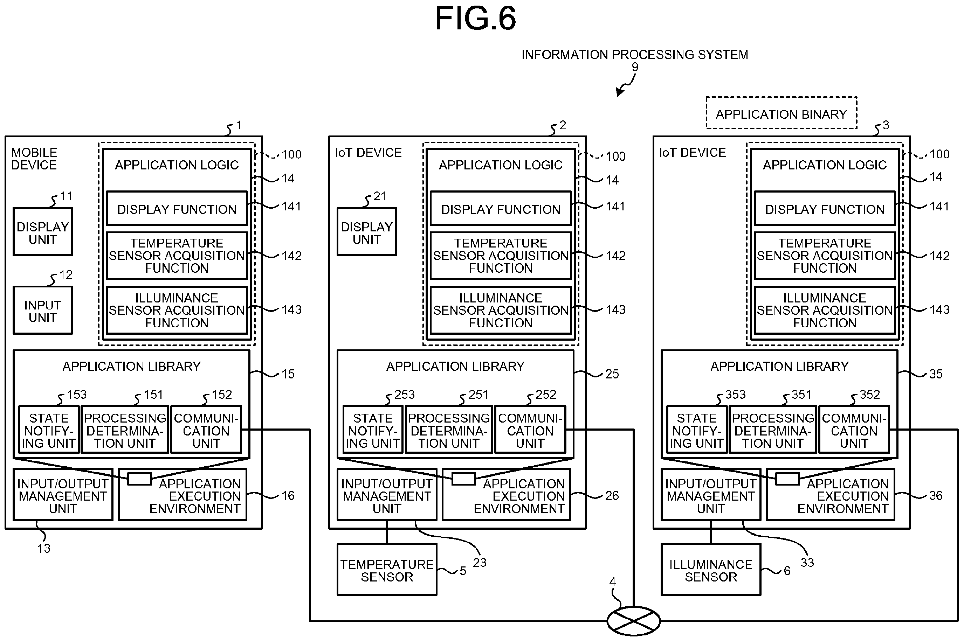

FIG. 6 is a block diagram illustrating a functional configuration of the information processing system according to the fourth embodiment. The same configuration as that of the information processing system 9 illustrated in FIG. 1 is denoted by the same reference numeral, and redundant description of the configuration and the operation will not be repeated. The fourth embodiment is different from the first embodiment in that state notifying units 153, 253, and 353 are added to the application libraries 15, 25, and 35, respectively.

The state notifying unit 153 transmits a notification of participation (participation notification) at a timing of participating in the network 4 in the specific region. The state notifying unit 153 transmits a notification of leaving (leaving notification) at a timing of leaving the network 4 in the specific region. A transmission method is, for example, broadcasting for transmitting data to a large number of unspecified individuals in the network 4. The leaving notification is performed when a value of a battery becomes equal to or smaller than a threshold, for example, but the embodiment is not limited thereto. Operations of the state notifying unit 253 and the state notifying unit 353 are the same as that of the state notifying unit 153, so that the description thereof will not be repeated.

The communication unit 152 dynamically configures a channel based on a state notified by the state notifying unit 153.

### Sequence of information exchange processing according to fourth embodiment

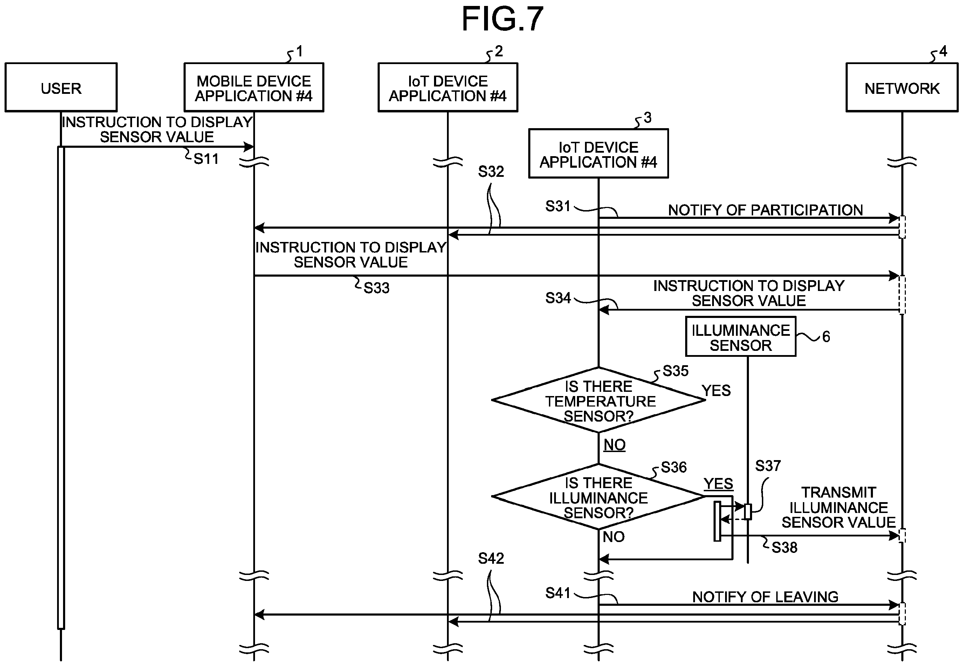

Next, the following describes a sequence of the information exchange processing according to the fourth embodiment with reference to FIG. 7. FIG. 7 is a diagram illustrating an example of the sequence of the information exchange processing according to the fourth embodiment. The sequence illustrated in FIG. 7 is used for a device configuration of the information processing system 9 illustrated in FIG. 6.

The mobile device 1 receives the instruction to display the sensor value from the user (S11). Thereafter, the mobile device 1 transmits the instruction to display the sensor value to the mobile device 1 and the IoT device 2 via the network 4 through broadcasting. The mobile device 1 and the IoT device 2 that have received the instruction to display the sensor value execute the information exchange processing. The information exchange processing is the same as the processing illustrated in FIG. 3, so that the description of the sequence thereof will not be repeated.

In the IoT device 3, the state notifying unit 353 transmits the participation notification to the network 4 through broadcasting (S31). The participation notification is then transmitted to the mobile device 1 and the IoT device 2 via the network 4 (S32).

The communication unit 152 of the mobile device 1 that has received the participation notification dynamically performs network connection, and dynamically configures a channel. The mobile device 1 transmits the instruction to display the sensor value received from the user to the IoT device 3 that has transmitted the participation notification (S33 and S34).

In the IoT device 3 that has received the instruction to display the sensor value, the processing determination unit 351 determines whether there is the temperature sensor 5 in the IoT device 3 (S35). The temperature sensor 5 is not mounted in the IoT device 3, so that the processing determination unit 351 does nothing.

In the IoT device 3, the processing determination unit 351 determines whether there is the illuminance sensor 6 in the IoT device 3 (S36). The illuminance sensor 6 is mounted in the IoT device 3, so that the processing determination unit 351 acquires the sensor value from the illuminance sensor 6 using the function of the application binary 100 (S37). The processing determination unit 351 transmits the illuminance sensor value acquired via the communication unit 352 to the network 4 through broadcasting (S38). The illuminance sensor value is then transmitted to each of the mobile device 1 and the IoT device 2 via the network 4.

Subsequently, the mobile device 1, the IoT device 2, and the IoT device 3 execute the information exchange processing. The information exchange processing is the same as the processing illustrated in FIG. 3, so that the description of the sequence thereof will not be repeated.

In the IoT device 3, the state notifying unit 353 transmits the leaving notification to the network 4 through broadcasting (S41). The leaving notification is then transmitted to the mobile device 1 and the IoT device 2 via the network 4 (S42).

Thereafter, the mobile device 1 and the IoT device 2 automatically perform network connection, dynamically configure the channel, and execute the information exchange processing.

### Effect of fourth embodiment

In this way, in the fourth embodiment described above, the information processing device notifies of a participation state or a leaving state at a timing of participating in or leaving the network 4 in the specific region. The information processing device then dynamically configures the channel based on the notified state. With such a configuration, the information processing device can easily participate in or leaving the network 4 in progress.

### [e] Fifth Embodiment

In the first embodiment, the application logic 14 indicating the function used for the operation of the application is assumed to be the application binary 100, the information processing device executes the information exchange processing using the application binary 100, and there is no duplicated piece of information in the acquired information. However, the information processing device is not limited thereto. The information processing device may execute the information exchange processing using the application binary 100, and may pick and choose the duplicated piece of information when there is the duplicated piece of information in the acquired information.

The fifth embodiment describes a case in which the information processing device executes the information exchange processing using the application binary 100, and picks and chooses the duplicated piece of information when there is the duplicated piece of information in the acquired information.

### Configuration of information processing system

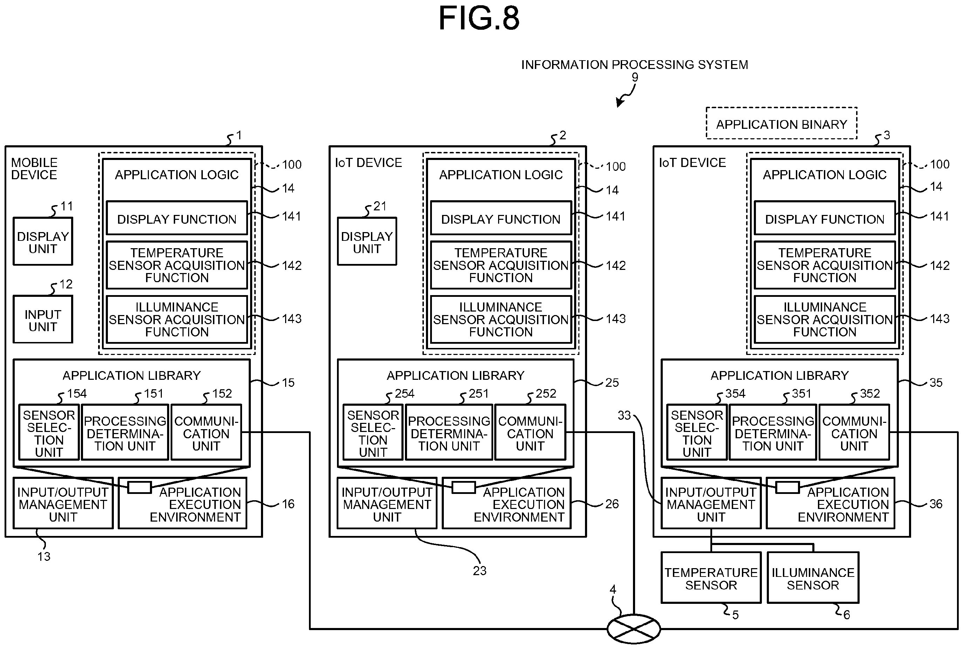

FIG. 8 is a block diagram illustrating a functional configuration of the information processing system according to the fifth embodiment. The same configuration as that of the information processing system 9 illustrated in FIG. 1 is denoted by the same reference numeral, and redundant description of the configuration and the operation will not be repeated. The fifth embodiment is different from the first embodiment in that sensor selection units 154, 254, and 354 are added to the application libraries 15, 25, and 35, respectively, and the temperature sensor 5 is added to the IoT device 3.

When pieces of acquired information acquired from another device in the specific region are duplicated, the sensor selection unit 154 automatically or manually picks and chooses the duplicated piece of acquired information. For example, when the pieces of acquired information are duplicated, the sensor selection unit 154 selects the piece of acquired information having higher accuracy, and discards the piece of acquired information having lower accuracy.

By way of example, in a case of the application that uses positional information, the sensor selection unit 154 displays the positional information acquired by the mobile device 1, and replaces the positional information with accurate positional information acquired from another device in the specific region to be displayed.

By way of another example, in a case of a shogi application that calculates the next move, the sensor selection unit 154 may perform arithmetic operations in the mobile device 1, the IoT device 2, and the IoT device 3, displays an arithmetic result obtained earliest, and interrupts other arithmetic operations.

By way of another example, in a case in which the acquired information is not allowed to be automatically selected, the sensor selection unit 154 causes the user to select an unneeded piece of acquired information. Operations of the sensor selection unit 254 and the sensor selection unit 354 are the same as that of the sensor selection unit 154, so that the description thereof will not be repeated.

### Sequence of information exchange processing according to fifth embodiment

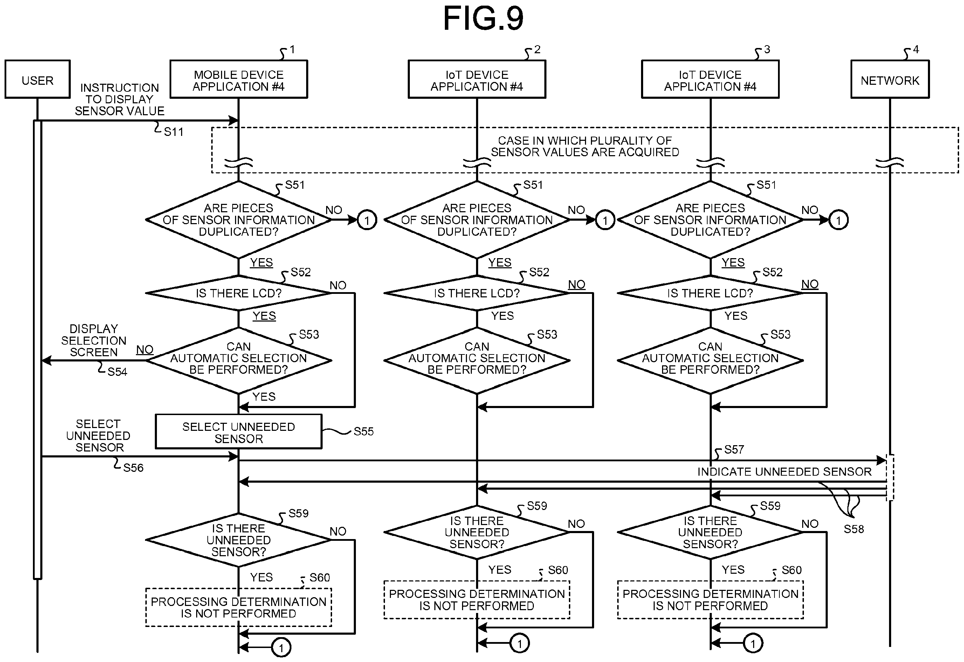

Next, the following describes a sequence of the information exchange processing according to the fifth embodiment with reference to FIG. 9. FIG. 9 is a diagram illustrating an example of the sequence of the information exchange processing according to the fifth embodiment.

The mobile device 1 receives the instruction to display the sensor value from the user (S11). Thereafter, the mobile device 1 transmits the instruction to display the sensor value to the mobile device 1, the IoT device 2, and the IoT device 3 via the network 4 through broadcasting, and acquires the sensor values acquired by each device.

It is assumed that a plurality of sensor values are acquired. For example, the sensor value of the temperature sensor 5 is assumed to be acquired from the IoT device 2 and the IoT device 3. That is, the sensor value of the temperature sensor 5 is assumed to be acquired in a duplicated manner.

In the mobile device 1, the sensor selection unit 154 determines whether pieces of sensor information are duplicated (S51). If it is determined that the pieces of sensor information are not duplicated (No at S51), the sensor selection unit 154 ends the sensor selection processing. By contrast, if it is determined that the pieces of sensor information are duplicated (Yes at S51), the sensor selection unit 154 determines whether there is the LCD (S52). In this case, the pieces of sensor information of the temperature sensor 5 are duplicated, so that the process of the sensor selection unit 154 proceeds to S52.

If it is determined that there is no LCD (No at S52), the process of the sensor selection unit 154 proceeds to S55 to automatically select an unneeded sensor. By contrast, if it is determined that there is the LCD (Yes at S52), the sensor selection unit 154 determines whether automatic selection can be performed (S53). In this case, it is assumed that there is the LCD (input unit 12) in the mobile device 1.

If it is determined that automatic selection can be performed (Yes at S53), the sensor selection unit 154 selects an unneeded sensor (S55). The process of the sensor selection unit 154 then proceeds to Step S57.

By contrast, if it is determined that automatic selection is not allowed to be performed (No at S53), the sensor selection unit 154 displays a selection screen on the LCD (S54). When the user selects an unneeded sensor (S56), the process of the sensor selection unit 154 proceeds to S57.

At S57, the sensor selection unit 154 transmits a notification for notifying of the unneeded sensor to the network 4 through broadcasting (S57). By way of example, the notification for notifying of the unneeded sensor is a notification for notifying that the unneeded sensor is the temperature sensor 5 of the IoT device 3. The notification for notifying the unneeded sensor is then transmitted to the mobile device 1, the IoT device 2, and the IoT device 3 via the network 4 (S58).

The sensor selection unit 154 determines whether there is an unneeded sensor in the mobile device 1 (S59). If it is determined that the mobile device 1 does not include an unneeded sensor (No at S59), the sensor selection unit 154 ends the sensor selection processing.

By contrast, if it is determined that the mobile device 1 includes an unneeded sensor (Yes at S59), the sensor selection unit 154 does not perform processing determination on the unneeded sensor with the processing determination unit 151 (S60). The sensor selection unit 154 then ends the sensor selection processing. In this case, for example, when the notification notifies that the unneeded sensor is the temperature sensor 5 of the IoT device 3, the sensor selection unit 154 determines that there is no unneeded sensor and ends the sensor selection processing.

In the IoT device 2, the sensor selection unit 254 performs the same processing as that of the sensor selection unit 154 in the mobile device 1. In this case, for example, when the notification notifies that the unneeded sensor is the temperature sensor 5 of the IoT device 3, the sensor selection unit 254 determines that there is no unneeded sensor in the IoT device 2 and ends the sensor selection processing. In the IoT device 3, the sensor selection unit 354 performs the same processing as that of the sensor selection unit 154 in the mobile device 1. In this case, for example, when the notification notifies that the unneeded sensor is the temperature sensor 5 of the IoT device 3, the sensor selection unit 354 determines that the IoT device 3 includes the unneeded sensor, and does not perform processing determination on the unneeded temperature sensor 5 with the processing determination unit 351.

### Effect of fifth embodiment

In this way, in the fifth embodiment described above, the information processing device automatically or manually picks and chooses the duplicated piece of acquired information when the pieces of acquired information are duplicated. With such a configuration, the information processing device can use a piece of acquired information having high accuracy among duplicated pieces of acquired information.

### Others

In the first embodiment to the fifth embodiment, the components of the devices illustrated in the drawings are not physically configured as illustrated in some cases. That is, specific forms of distribution and integration of the devices are not limited to those illustrated in the drawings. All or part thereof may be functionally or physically distributed/integrated in arbitrary units depending on various loads or usage states. For example, the processing determination unit 151 may be distributed as a determination unit that performs processing determination, a first acquisition unit that acquires a result of processing determination with the mobile device 1, and a second acquisition unit that acquires the result with another device. The application binary 100 may be connected via a network as an external device of the mobile device 1.

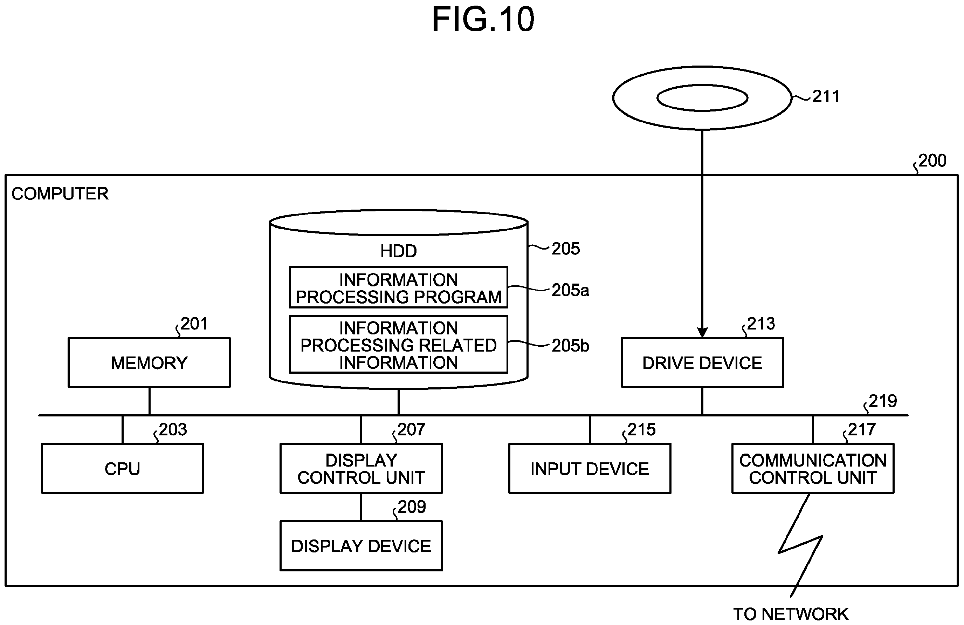

Various types of processing described in the above embodiments can be implemented by executing a computer program prepared in advance on a computer such as a personal computer or a workstation. The following describes an example of a computer that executes an information processing program including information exchange processing that implements the same function as that of the mobile device 1 and the IoT devices 2 and 3 illustrated in FIG. 1. FIG. 10 is a diagram illustrating an example of the computer that executes the information processing program.

As illustrated in FIG. 10, a computer 200 includes a CPU 203 that executes various pieces of arithmetic processing, an input device 215 that receives a data input from a user, and a display control unit 207 that controls a display device 209. The computer 200 includes a drive device 213 that reads a computer program and the like from a storage medium, and a communication control unit 217 that exchanges data with another computer via a network. The computer 200 includes a memory 201 that temporarily stores various pieces of information and an HDD 205. The memory 201, the CPU 203, the HDD 205, the display control unit 207, the drive device 213, the input device 215, and the communication control unit 217 are connected to one another via a bus 219.

The drive device 213 is, for example, a device for a removable disk 211. The HDD 205 stores an information processing program 205a and information processing related information 205b.

The CPU 203 reads out the information processing program 205a to be loaded into the memory 201 and executed as a process. The process corresponds to each functional part of the mobile device 1, the IoT device 2, and the IoT device 3. The information processing related information 205b corresponds to the application logic 14 and the like. For example, the removable disk 211 stores various pieces of information such as the information processing program 205a.

The information processing program 205a is not stored in the HDD 205 from the beginning in some cases. For example, the program may be stored in a "portable physical medium" such as a flexible disk (FD), a CD-ROM, a DVD disc, a magneto-optical disc, and an IC card to be inserted into the computer 200. Then, the computer 200 may read out the information processing program 205a from these media, and execute the information processing program 205a.

According to an embodiment of one aspect of the invention, the management cost for the application can be reduced, the application being used for information exchange in exchanging information between devices in a specific place.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. An information processing device (1, 2, 3) comprising:
a storage unit (100) that stores an application (14) equivalent to an application incorporated in another device in a specific region connectable to a network; and
a control unit (15, 25, 35) that when a function of acquiring predetermined information is available to the information processing device, acquires the predetermined information using the application and transmits the acquired information to the specific region, and when the function of acquiring the predetermined information is unavailable to the information processing device, receives the acquired information from the other device in the specific region.

2. The information processing device (1, 2, 3) according to claim 1, wherein the storage unit (110) packages the application and the control unit to be stored therein.

3. The information processing device (1, 2, 3) according to claim 1, wherein the storage unit (120) packages the application, the control unit, and an application execution environment to be stored therein.

4. The information processing device (1, 2, 3) according to any of claims 1 to 3, wherein the control unit includes automatically performing network connection in the specific region, dynamically configuring a channel, and performing communication between applications (152, 252, 352).

5. The information processing device (1, 2, 3) according to any of the preceding claims, wherein the control unit includes notifying of a participation state or a leaving state at a timing of participating in or leaving the network in the specific region (153, 253, 353), and dynamically configuring a channel based on the state notified at notifying (152, 252, 352).

6. The information processing device (1, 2, 3) according to any of the preceding claims, wherein the control unit includes automatically or manually picking and choosing, when pieces of the acquired information are duplicated, a duplicated piece of the acquired information (154, 254, 354).

7. An information processing program (205a) that causes a computer (200) to execute a process comprising:
storing an application equivalent to an application incorporated in another device in a specific region connectable to a network; and
when a function of acquiring predetermined information is available to the computer, acquiring the predetermined information using the application and transmitting the acquired information to the specific region, and when the function of acquiring the predetermined information is unavailable to the computer, receiving the acquired information from the other device in the specific region.

8. An information processing method, wherein a computer (1, 2, 3) executes a process comprising:
storing an application equivalent to an application incorporated in another device in a specific region connectable to a network; and
when a function of acquiring predetermined information is available to the computer, acquiring the predetermined information using the application and transmitting the acquired information to the specific region, and when the function of acquiring the predetermined information is unavailable to the computer, receiving the acquired information from the other device in the specific region (S14-S23).
